# EUROPEAN PATENT SPECIFICATION

(11) **EP 4 485 232 B1**
(45) Date of publication and mention of the grant of the patent: **08.07.2026**
(21) Application number: 23777766.9
(22) Date of filing: 06.03.2023
(51) Int. Cl.: G06F 3/0481, G06F 3/0482, G06F 3/0484, G06F 3/04886, G06F 16/957

(54) **PAGE DISPLAY METHOD AND APPARATUS, DEVICE AND STORAGE MEDIUM**
SEITENANZEIGEVERFAHREN UND -VORRICHTUNG, VORRICHTUNG UND SPEICHERMEDIUM
PROCÉDÉ ET APPAREIL D'AFFICHAGE DE PAGE, DISPOSITIF, ET SUPPORT DE STOCKAGE

(30) Priority: 28.03.2022 CN 202210316093
(43) Date of publication of application: 01.01.2025
(73) Proprietor: Beijing Zitiao Network Technology Co., Ltd., Beijing 100190 (CN)
(72) Inventor: TANG, Xinchen, Beijing 100086 (CN); YU, Qin, Beijing 100086 (CN); ZHAO, Yuxuan, Beijing 100086 (CN)
(74) Representative: Marks & Clerk LLP
(86) International application number: PCT/CN2023/079808
(87) International publication number: WO 2023/185388

(56) References cited:
- WO-A1-2016/063258
- CN-A- 110 124 314
- CN-A- 112 433 654
- CN-A- 113 296 669
- CN-A- 113 395 202
- CN-A- 113 625 921
- CN-A- 113 805 762
- CN-A- 114 202 376
- CN-A- 114 692 038
- US-A1- 2003 097 406
- US-A1- 2017 118 334
- US-A1- 2017 185 267
- US-A1- 2018 335 930
- US-B1- 10 126 924

## Description

This disclosure claims priority to the Chinese Patent Application No. 202210316093.3 filed on March 28, 2022 to the Chinese Patent Office.

### TECHNICAL FIELD

The embodiment of the present disclosure relates to a technical field of a computer, such as a method for displaying an interface, an apparatus, a device and a storage medium.

### BACKGROUND

With the rapid development of internet technology and terminal technology, the functions provided by applications are becoming increasingly rich, and users can interact with each other through the applications.

In the related art, users communicate mainly through conversation interfaces. For example, users need to find a message list interface or a contact list interface in an application, find a contact person who wants to interact with messages from the contact list interface, and then enter the conversation interface of the contact person, input the message content in the form of text or voice in the conversation interface, and send it to the contact person, which is complicated in operation process and inefficient in interaction. US2017/118334 A1 provides a voice chat management device that manages a voice chat between users. US10126924B1 discloses a computer-implemented method. When the user requests a contact interface, the messaging module displays a contact interface that includes multiple rows. Each row includes a contact interface element. US2003/097406A1 proposes a method of exchanging messages, the first and second personal computer systems exchange messages using message exchange software. US2018/335930A1 relates to generating and modifying virtual avatars. An electronic device having a camera and a display apparatus displays a virtual avatar that changes appearance in response to changes in a face in a field of view of the camera.

### SUMMARY

It is an object of the present invention to provide a method for displaying an interface, an apparatus, a storage medium and a device, which can optimize the interface display scheme in related technology and improve the efficiency of message interaction. The object is achieved by the features of the respective independent claims. Further embodiments are defined in the corresponding dependent claims. Even though the description refers to embodiments or to the invention, it is to be understood that the invention is defined by the claims and embodiments of the invention are those comprising at least all the features of one of the independent claims.

### BRIEF DESCRIPTION OF DRAWINGS

Fig. 1 is a schematic flowchart of a method for displaying an interface provided by an embodiment of the present disclosure;
Fig. 2 is an interface interaction schematic diagram of a method for displaying an interface provided by an embodiment of the present disclosure;
Fig. 3 is a schematic diagram of a preset interface provided by an embodiment of the present disclosure;
Fig. 4 is a schematic diagram of another preset interface provided by an embodiment of the present disclosure;
Fig. 5 is a schematic diagram of still another preset interface provided by an embodiment of the present disclosure;
Fig. 6 is a schematic flowchart of another method for displaying an interface provided by an embodiment of the present disclosure;
Fig. 7 is an interface interaction schematic diagram of another method for displaying an interface provided by an embodiment of the present disclosure;
Fig. 8 is an interface interaction schematic diagram of still another method for displaying an interface provided by an embodiment of the present disclosure;
Fig. 9 is a structural block diagram of an apparatus for interface display provided by an embodiment of the present disclosure;
Fig. 10 is a structural block diagram of an electronic device provided by an embodiment of the present disclosure.

### DETAILED DESCRIPTION

Embodiments of the present disclosure are described below with reference to the drawings. Although certain embodiments of the present disclosure are shown in the drawings, it should be understood that the present disclosure may be achieved in various forms. It should be understood that the drawings and the embodiments of the present disclosure are only for exemplary purposes.

It should be understood that various steps recorded in the implementation modes of the method of the present disclosure may be performed according to different orders and/or performed in parallel. In addition, the implementation modes of the method may include additional steps and/or steps omitted or unshown.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that, the modifications of "one" and "more" mentioned in the present disclosure are schematic, and those skilled in the art should understand that unless otherwise explicitly stated in the context, it should be understood as "one or more".

The names of messages or information interacted between a plurality of devices in the embodiment of the present disclosure are only used for illustrative purposes, and are not used to limit the scope of these messages or information.

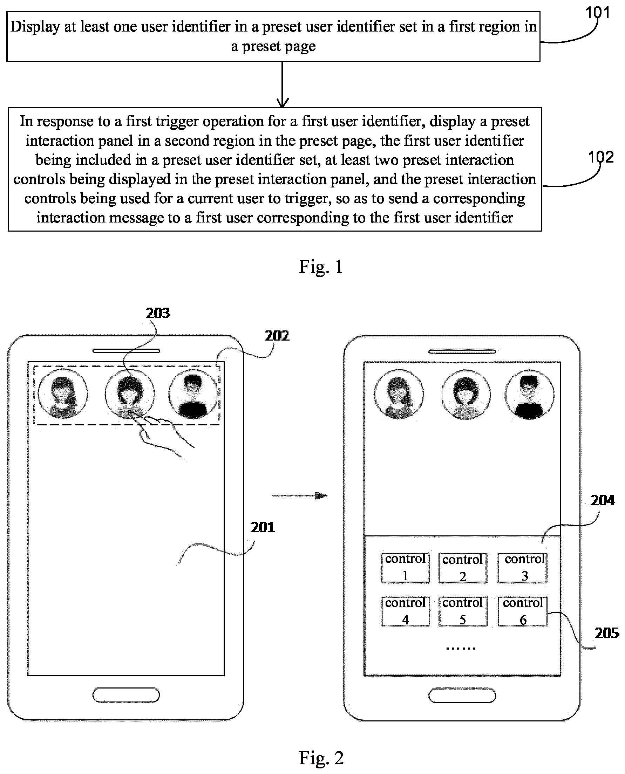

Fig. 1 is a schematic flowchart of a method for displaying an interface provided by an embodiment of the present disclosure, and the method can be executed by an apparatus for interface display, the apparatus can be implemented by software and/or hardware, and generally can be integrated in an electronic device. The electronic device can be mobile devices such as mobile phones, smart watches, tablet computers and personal digital assistants, it can also be other devices such as desktop computers. As shown in Fig. 1, the method includes:

Step 101: displaying at least one user identity in a preset user identity set in a first region of a preset interface.

In the embodiment of the present disclosure, the preset interface may be an interface in preset applications, and the types of the preset applications may be, for example, a social application, an instant messaging application, a video application or a live broadcast application, and other types of applications.

Exemplarily, the preset user identity set includes a plurality of user identities, and the contents of the user identities may include, for example, a user name or a user profile picture. For example, the user corresponding to the user identity included in the preset user identity set is currently online; in another example, the users corresponding to the user identities included in the preset user identity set have a preset association relationship with the current user (such as follow each other or be friends with each other); for another example, the user corresponding to the user identity included in the preset user identity set has message interaction with the current user in the latest preset time period.

Exemplarily, all or a part of the user identity in the preset user identity set can be displayed in the first region of the preset interface, and if a part of the user identity is currently displayed, it can be switched under the action of the preset operation (such as the sliding operation). The shape, the size and the position of the first region in the preset interface can be set according to actual requirements.

Fig. 2 is an interface interaction schematic diagram of a method for displaying an interface provided by an embodiment of the present disclosure. As shown in Fig. 2, the top of a preset interface 201 is provided with a first region 202, and three user identities 203 in the form of profile pictures are displayed in the first region 202.

Step 102: in response to a first trigger operation on a first user identity displayed in the first region, displaying a preset interactive panel in a second region of the preset interface, and displaying at least one preset interactive control in the preset interactive panel, in which the first user identity is included in the at least one user identity, and the preset interactive control is used to be triggered by a current user to send a message to the first user corresponding to the first user identity.

Exemplarily, the type of the first trigger operation may be, for example, a click or a long press. The first user identity can be any one of the user identities currently displayed in the first region, and it can be determined according to the first trigger operation input by the current user that the user corresponding to the first user identity is recorded as the first user. As shown in Fig. 2, when the user clicks on the user identity in the middle, the user identity in the middle is regarded as the first user identity.

Exemplarily, after receiving the first trigger operation on the first user identity, it can be considered that the current user has a need to interact with the first user, and the preset interactive panel is displayed in the second region of the preset interface. The shape, the size and the position of the second region in the preset interface can be set according to actual requirements. Optionally, there is no overlapping region between the second region and the first region, which can prevent the preset interactive panel from blocking the currently displayed user identity. At least one preset interactive control is displayed in the preset interactive panel. If at least two preset interactive controls are displayed, different preset interactive controls can correspond to different messages, that is, different messages can be sent by triggering different preset interactive controls. As shown in Fig. 2, six preset interactive controls 205 are displayed in the preset interactive panel 204.

Exemplarily, when a preset interactive control is displayed in the preset interactive panel, the current user can trigger the preset interactive control to send a message to the first user; when at least two preset interactive controls are displayed in the preset interactive panel, the current user can choose to trigger one of the preset interactive controls according to personal needs, so as to send a message corresponding to the selected preset interactive control to the first user. Among them, the types of the preset interactive controls can be set according to actual needs. For example, if the current user selects the preset interactive control for good morning greeting, a message related to good morning can be sent to the first user, and the message content can be "good morning" or a sun icon, and so on.

In the interface display scheme provided by the embodiment of the present disclosure, at least one user identity in the preset user identity set is displayed in the first region of the preset interface, the preset interactive panel is displayed in the second region of the preset interface in response to the first trigger operation on a first user identity displayed in the first region, and at least one preset interactive control is displayed in the preset interactive panel, and the preset interactive control is used to be triggered by a current user to send a message to a first user corresponding to the first user identity. By adopting the above technical scheme, the current user can select the interactive object in the preset interface, automatically trigger the display of the preset interactive panel in the preset interface after selection, and display the preset interactive control on the preset interactive panel, so that the current user can conveniently send a message to the interactive object by triggering the preset interactive control, and the message interaction efficiency can be effectively improved.

In some embodiments, when a preset interactive panel is displayed in the second region in the preset interface, the first region in the preset interface keep to display the first user identity. This arrangement can make the current user clear the object to which the current message is to be sent in the process of sending messages based on the preset interactive panel. As shown in Fig. 2, when the preset interactive panel 204 is displayed, the user identity in the middle, which is the current first user identity, is still displayed.

In some embodiments, the method further comprises: in response to the first trigger operation on the first user identity, adjusting the display mode of the region other than the second region and the first user identity in the preset interface. It can be understood that by changing the display method, the current user can more intuitively determine the object to which the current message is to be sent and the operation region for sending messages according to the object to which the current message is to be sent. Among them, the adjustment mode of the display mode can include at least one of the adjustment modes such as color adjustment, transparency adjustment and adding borders. Exemplarily, the region that needs to be adjusted in the display mode can be recorded as a target region, and the target region can be determined first, for example, the display region where the first user identity is located in the preset interface is excluded, the second region is excluded, and the remaining region is used as the target region. After determining the target region, adjusting the display mode of the target region, such as deepening the display color of the target region, increasing the transparency of the target region, and adding borders to a boundary of the target region and so on.

In some embodiments, the method further comprises determining the preset interactive control displayed in the preset interactive panel based on preset information. The arrangement can more flexibly determine the preset interactive controls currently displayed in the preset interactive panel.

In some embodiments, the preset information includes at least one selected from the group consisting of: current application scenario, time information, attribute information of the first user, attribute information of the current user, and the association relationship between the current user and the first user. The arrangement can provide the current user with appropriate preset interactive controls more flexibly and intelligently, which is beneficial for improving the interactive effect.

Exemplarily, the current application scenario can be determined according to at least one of a type of the preset interface and an interface content in the preset interface; the time information can include, for example, the date of the day, whether the day is a holiday or a time period of the day in which the current time is located and so on. The attribute information of the first user may include, for example, information that the current user has set as public; the attribute information of the current user may include, for example, information that the current user has set as public; the association relationship between the current user and the first user can include, for example, following each other or being friends with each other, and interaction frequency in the latest preset period, etc. It can be understood that, before using the technical solutions disclosed in various embodiments of the present disclosure, users should be informed of the types, scope of use and usage scenarios of personal information involved in the present disclosure in an appropriate way in accordance with relevant laws and regulations and be authorized by users.

In some embodiments, the preset interactive controls include an emoji control, and the emoji control is used to be triggered by the current user to send a corresponding message to the first user. The arrangement can facilitate the current user to quickly realize the interaction with the first user through the emoji control. For example, the current user has selected a smiley emoji control that can send smiley emoji messages to the first user.

In some embodiments, the preset interactive controls include a message input sub-panel, and the message input sub-panel is used for the current user to be input the message content sent to the first user. It can be understood that, the current user can input the message content of the message to be sent by himself/herself through the message input sub-panel, which enriches the interactive mode.

Exemplarily, the preset interactive control can include not only the emoji control, but also the message input sub-panel, such as a keyboard, or a message input trigger region, such as a message input box, or other forms of interactive controls.

Optionally, at least two types of preset interactive controls can be displayed in the preset interactive panel. For example, both the emoji control and the message input sub-panel are shown.

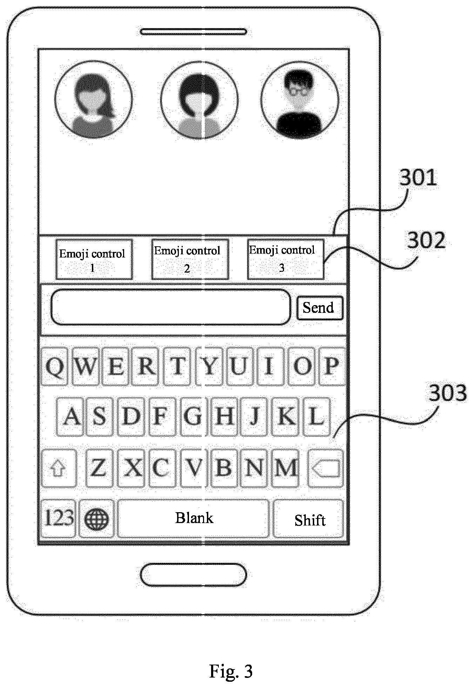

Fig. 3 is a schematic diagram of a preset interface provided by an embodiment of the present disclosure. As shown in Fig. 3, three emoji controls 302 and a message input sub-panel 303 are shown in a preset interactive panel 301, and the current user can choose an appropriate message sending method according to personal needs.

In some embodiments, the preset interactive control includes a message input trigger region, the message input trigger region is used for the current user to trigger to show a message input sub-panel, and the message input sub-panel is used for the current user to be input the message content sent to the first user. It can be understood that, showing the message input sub-panel after the user triggers the message input trigger region can improve the utilization rate of the second region, and when the display area of the second region is limited, more preset interactive controls can be shown in the preset interactive panel.

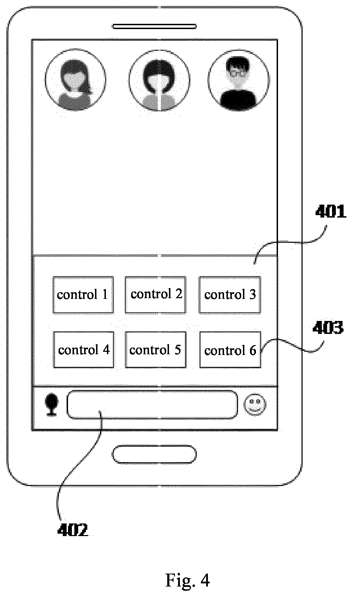

Fig. 4 is a schematic diagram of another preset interface provided by an embodiment of the present disclosure. As shown in Fig. 4, a message input trigger region 402 and six other types of preset interactive controls 403 are shown in a preset interactive panel 401. For example, six other types of preset interactive controls 403 can be emoji controls. If the current user wants to send a message by triggering the emoji controls, he/she can select an appropriate emoji control to trigger. If the current user wants to input the message content himself/herself, the message input trigger region 402 can be triggered. and then the message content can be input through the message input sub-panel shown later.

In some embodiments, at least two user identities in the preset user identity set are displayed in the first region, and the method may further include: in response to a first trigger operation on the first user identity, adjusting the display mode of at least one of the first user identity and the second user identity to make that the current display mode of the first user identity is different from that of the second user identity, the second user identity is included in the at least two user identities. The arrangement makes it easier to distinguish the user identity selected by the current user from other user identities, so that the current user can more intuitively identify the object to which the current message is to be sent and improve the interactive experience. Among them, the second user identity may include user identities other than the first user identity in the currently displayed preset user identity set, and may also include user identities other than the first user identity in the currently non-displayed preset user identity set. For example, when the current user inputs a sliding operation in the first region to increase the display of the user identities in the new preset user identity set in the first region, the new user identity can also be regarded as the second user identity.

Exemplarily, the adjustment of the display mode may include, for example, display sizes, display shapes, display positions, display borders, display colors, display contents, transparency, etc., and may also include the display adjustment of information associated with the user identity.

In some embodiments, the method further includes: in response to the first trigger operation on the first user identity, displaying a translucent layer in a third region other than the second region in the preset interface, in which the third region comprises the first region; adjusting the display mode of at least one of the first user identity and the second user identity to make the current display mode of the first user identity different from the current display mode of the second user identity comprises: displaying the first user identity on an upper layer of the translucent layer and displaying the second user identity on a lower layer of the translucent layer. It can be understood that, the translucent layer can be used to block the second user identity to a certain extent, so that the current visibility of the first user identity is higher than that of the second user identity, thus the first user identity is distinguished from the second user identity quickly. The third region includes the first region, and the size of the third region can be set according to actual requirements, optionally, the union of the second region and the third region is the total display region of the preset interface.

In some embodiments, adjusting the display mode of at least one of the first user identity and the second user identity to make the current display mode of the first user identity different from the current display mode of the second user identity includes: adjusting a display size of at least one of the first user identity and the second user identity to make that a current display size of the first user identity larger than a current display size of the second user identity. It can be understood that, the first user identity and the second user identity can be quickly distinguished by the size of the display size.

Exemplarily, assuming that at least two user identities of a first size in a preset user identity set are displayed in the first region in the preset interface, that is, the initial display sizes of the first user identity and the second user identity are the first size respectively, the display size of the first user identity can be adjusted to a second size (the second size is larger than the first size), and/or the display size of the second user identity can be adjusted to a third size (the third size is smaller than the first size) during adjustment.

In some embodiments, adjusting the display mode of at least one of the first user identity and the second user identity to make the current display mode of the first user identity different from the current display mode of the second user identity includes: adjusting the shape and/or the color of at least one of the first user identity and the second user identity to make the current shape and/or the current color of the first user identity different from the current shape and/or the current color of the second user identity. It can be understood that, the first user identity and the second user identity can be quickly distinguished by different display shapes and/or colors.

Exemplarily, it is assumed that at least two user identities of a first shape (such as a circle) and a first color (such as a black border) in a preset user identity set are displayed in the first region in the preset interface before the first trigger operation, and during adjustment, the shape of the first user identity can be adjusted to a second shape (such as a square), and the first color of the second user identity can be adjusted to a second color (such as a gray border) and so on.

In some embodiments, adjusting the display mode of at least one of the first user identity and the second user identity to make the current display mode of the first user identity different from the current display mode of the second user identity includes: when both the first user identity and the second user identity do not show first association information before the first trigger operation, adding and showing the first association information for the first user identity, and/or when both the first user identity and the second user identity have shown second association information before the first trigger operation, removing the showing of the second association information of the second user identity. It can be understood that, the first user identity and the second user identity can be quickly distinguished through the showing of the association information.

The first association information and the second association information can be the same or different, and the display positions of the first association information and the second association information can be set according to actual needs. Exemplarily, assuming that the user identity is the user's profile picture, the first association information and the second association information may include the user's nickname or the latest message sent by the user to the current user. For example, if at least two user profile pictures in the preset user identity set are displayed in the first region of the preset interface before the first trigger operation, each of the user profile pictures does not display the corresponding user nickname, and when adjusting the display mode, the corresponding user nickname can be displayed below the first user identity, but not below the second user identity; if at least two user profile pictures in the preset user identity set are displayed in the first region of the preset interface before the first trigger operation, corresponding user nicknames are displayed below each of the user profile pictures. When the display mode is adjusted, the user nicknames displayed below the second user identity can be hidden, while the user nicknames displayed below the first user identity remain unchanged.

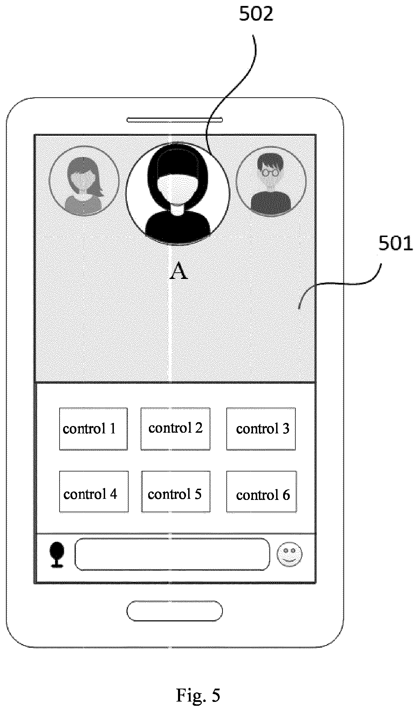

In some embodiments, the display mode of at least one of the first user identity and the second user identity can be adjusted by combining the above adjustment modes, so as to enhance the distinguishing effect. Fig. 5 is a schematic diagram of still another preset interface provided by an embodiment of the present disclosure. As shown in Fig. 5, a translucent layer 501 is displayed in the third region, assuming that the user identity in the middle is selected as the first user identity 502 by the current user, and the user identities on the left side and the right side become the second user identities, the first user identity 502 is located on the upper layer of the translucent layer 501 and the second user identities are located on the lower layer of the translucent layer 501. The visibility of the first user identity 502 is higher than the visibility of the second user identities, and the display size of the first user identity 502 becomes larger, and larger than the display size of the second user identity. At the same time, the nickname "A" of the first user is displayed below the first user identity 502. The current user can quickly distinguish the first user identity from the second user identities through the above changes.

In some embodiments, the method further includes: in response to the first trigger operation on the first user identity, adjusting at least one of the following: a display mode of the first region and a number of the user identity currently displayed in the first region. The arrangement can make the display of the first region and/or the user identity more flexible.

Exemplarily, the display position of the first region can be adjusted to make that a distance between a center position of the first region and a center position of the second region is reduced; the number of the currently displayed user identities can be increased; the display size of the first region can be increased, and the number of the currently displayed user identities can also be increased.

In some embodiments, after the preset interactive panel is displayed in the second region in the preset interface, the method further comprises: keeping a third user identity in a triggerable state, in which, the third user identity comprises the user identity except the first user identity in the preset user identity set. It can be understood that, under the condition that the preset interactive panel is displayed, the current user can still choose to trigger other user identities, and it is not necessary to close the preset interactive panel and re-select the interactive object, thus the interactive efficiency is improved. If a third user identity is not displayed at present, the user identity displayed in the first region can be updated by sliding operation under the condition that the preset interactive panel is in the display state, so that the third user identity can be displayed and can be triggered by the current user.

In some embodiments, after the preset interactive panel is displayed in the second region in the preset interface, the method further comprises: in response to a second trigger operation on the third user identity, updating the preset interactive control displayed in the preset interactive panel based on the third user identity. It can be understood that, when the interactive object changes, the preset interactive control for the new interactive object is dynamically updated, which makes the message interaction more targeted and improves the interactive effect.

In some embodiments, after displaying the preset interactive panel in the preset interface, the method further comprises: in response to a third trigger operation on a first preset interactive control in the preset interactive panel, sending a first message to the first user corresponding to the first user identity, in which the first message is associated with graphic and text information of the first preset interactive control. The arrangement can help the user to know the content of the message to be sent conveniently according to the graphic and text information of the interactive control. For example, the graphic and text information of the first preset interactive control is the sun pattern, and the first message can be a picture message containing the sun pattern or a text message containing "good morning".

In some embodiments, the method further comprises: in response to the third trigger operation on the first preset interactive control in the preset interactive panel, playing an animation effect with a moving direction pointing to the first user identity in the preset interface, in which the animation effect is associated with the graphic and text information of the first preset interactive control. The arrangement can make the content displayed on the interface more vivid and rich, and enhance the interactive experience. For example, the graphic and text information of the first preset interactive control is the sun pattern, which can play an animation effect of the dynamic movement of the sun pattern from the position of the first preset interactive control to the position of the first user identity, and can also play dynamic effects such as radiating sunlight during the movement and/or after reaching the position of the first user identity.

In some embodiments, the method further includes: receiving a second message, in which the second message is sent by a second user based on a second preset interactive control; displaying the second message and a third preset interactive control in a conversation interface, in which the third preset interactive control is associated with the second preset interactive control, and the conversation members in the conversation interface comprise the current user and the second user. It can be understood that, when receiving the message sent by other users by triggering the preset interactive control, the associated preset interactive control can be used to respond conveniently, so as to improve the interactive efficiency and enhance the interactive experience.

Optionally, when the second message is received, a message receiving notification can be displayed, and the current user can enter a conversation interface with the second user after triggering the message receiving notification.

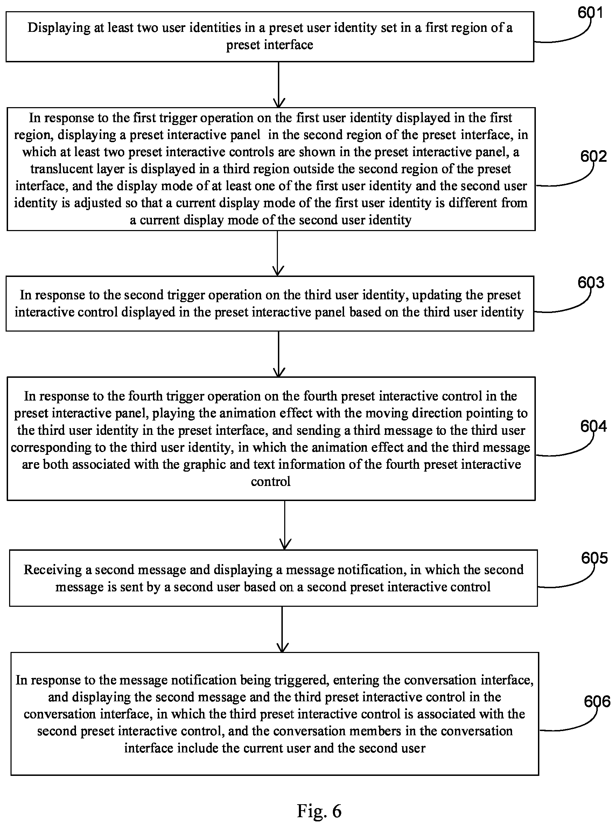

Fig. 6 is a schematic flowchart of another method for displaying an interface provided by an embodiment of the present disclosure, which is modified based on various alternative schemes in the above embodiments, and the method includes the following steps:

Step 601: displaying at least two user identities in a preset user identity set in a first region of a preset interface.

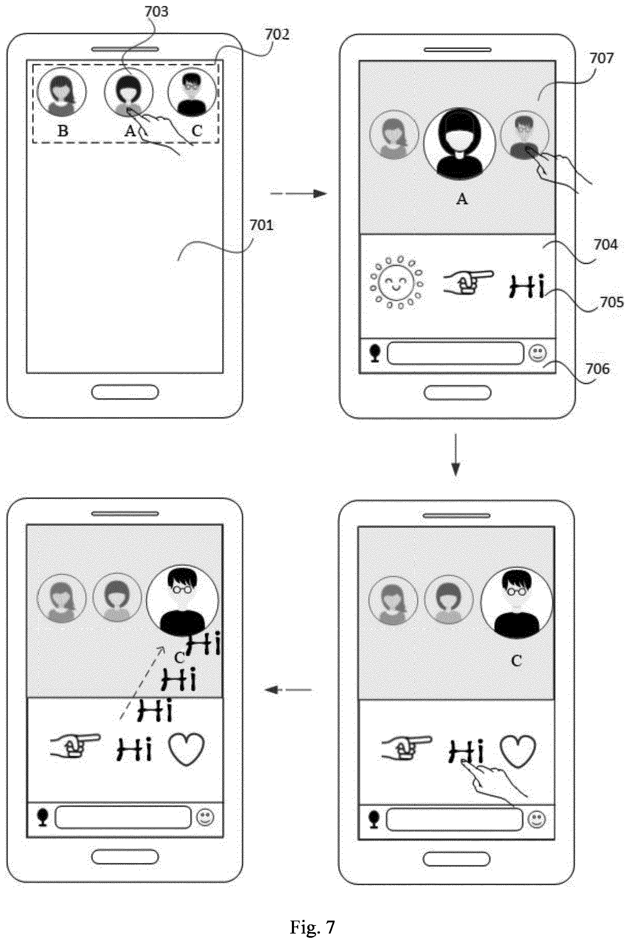

Exemplarily, the user corresponding to the user identities contained in the preset user identity set is currently online. Fig. 7 is an interface interaction schematic diagram of a method for displaying an interface provided by an embodiment of the present disclosure. As shown in Fig. 7, the top of a preset interface 701 is provided with a first region 702, and three user identities 703 in the form of profile pictures are displayed in the first region 702, and a user nickname as the second associated information is displayed below each user identity. The display content outside the first region 702 in the preset interface 701 can be, for example, media content or a message list.

Step 602: in response to the first trigger operation on the first user identity displayed in the first region, displaying a preset interactive panel in the second region of the preset interface, in which at least two preset interactive controls are shown in the preset interactive panel, a translucent layer is displayed in a third region outside the second region of the preset interface, and the display mode of at least one of the first user identity and the second user identity is adjusted so that a current display mode of the first user identity is different from a current display mode of the second user identity.

The first user identity is included in the at least two user identities, and the second user identity includes the user identity other than the first user identity in the preset user identity set. The emoji controls displayed in the preset interactive panel can be determined according to the current application scenario, time information, attribute information of the first user, attribute information of the current user, and an association relationship between the current user and the first user. The preset interactive controls are used to be triggered by the current user to send a message to the first user corresponding to the first user identity.

Exemplarily, as shown in Fig. 7, assuming that the current user first triggers the user identity corresponding to A as the first user identity by clicking, and a preset interactive panel 704 is displayed in the second region of the preset interface. Three emoji controls 705 related to the first user are shown in the preset interactive panel 704, namely, a sun control, a poke control and a "Hi" control, and a message input trigger region 706 is also displayed in the preset interactive panel 704. A translucent layer 707 is displayed in the third region except the second region in the preset interface. The user identity of A is displayed on the upper layer of the translucent layer 707, and the user identities of B and C are displayed on the lower layer of the translucent layer 707. The size of the user identity of A is increased, and the nicknames of the user identities of B and C are hidden.

Optionally, as shown in Fig. 7, the display position of the first region can be adjusted so that the distance between the center position of the first region and the center position of the second region is reduced. In addition, more user identities can be displayed in the first region.

Step 603: in response to the second trigger operation on the third user identity, updating the preset interactive control displayed in the preset interactive panel based on the third user identity.

The third user identity comprises the user identity except the first user identity in the preset user identity set.

Exemplarily, as shown in Fig. 7, after the preset interactive panel 704 is displayed, the third user identity is kept in a triggerable state, and the current user can trigger the user identity corresponding to C by clicking, and the emoji control displayed in the preset interactive panel will also be updated for C, such as changing the sun control into a heart control. and adjusting the positions of the poke control and the "Hi" control forward.

Step 604: in response to the fourth trigger operation on the fourth preset interactive control in the preset interactive panel, playing the animation effect with the moving direction pointing to the third user identity in the preset interface, and sending a third message to the third user corresponding to the third user identity, in which the animation effect and the third message are both associated with the graphic and text information of the fourth preset interactive control.

Exemplarily, as shown in Fig. 7, after the current user clicks the "Hi" control (the fourth preset interactive control), an animated effect pointing to the user identity of C is played in the preset interface, and "Hi" moves dynamically from the preset interactive panel to the user identity of C, which can make the current user feel the effect of greeting C and improve the interactive experience. Moreover, the C who is currently online, can receive the greeting message from the current user, for example, a message notification, so that the current user and C can realize convenient message interaction on the non-conversation interface, and can experience a novel message interaction mode and enhance the interaction experience.

Step 605: receiving a second message and displaying a message notification, in which the second message is sent by a second user based on a second preset interactive control.

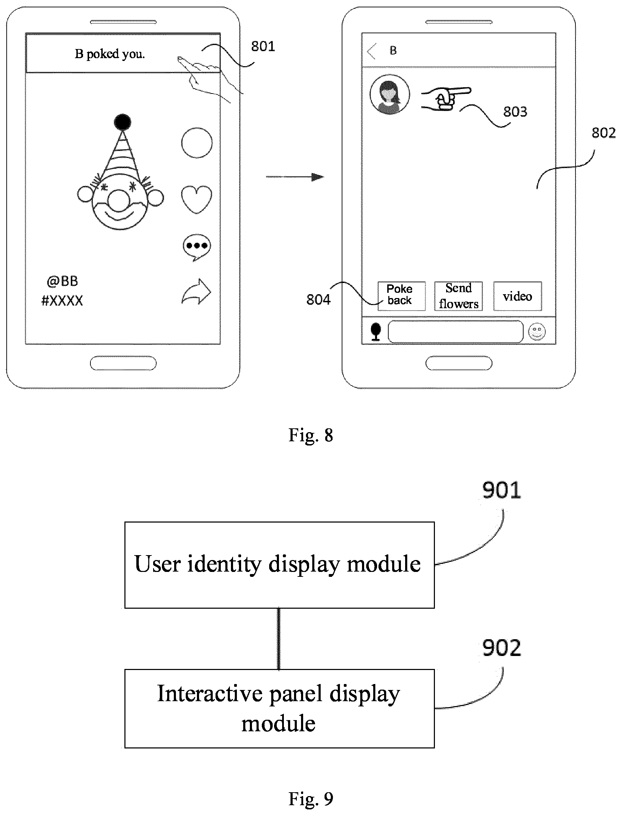

Fig. 8 is an interface interaction schematic diagram of still another method for displaying an interface provided by the embodiment of the present disclosure. Assuming that the current user receives a message sent by B through the poke control (a second preset interactive control) while watching a video stream, a notification message 801 can be displayed.

Step 606: in response to the message notification being triggered, entering the conversation interface, and displaying the second message and the third preset interactive control in the conversation interface, in which the third preset interactive control is associated with the second preset interactive control, and the conversation members in the conversation interface include the current user and the second user.

For example, as shown in Fig. 8, if the current user clicks the notification message 801, he/she can enter the conversation interface 802 with B, and the second message 803 and the poke back control 804 (the third preset interactive control) associated with the poke control are displayed in the conversation interface 802, thus the interaction efficiency is improved.

According to the method for displaying an interface provided by the embodiment of the present disclosure, user identities of at least two users online are displayed in the preset interface, the preset interactive panel containing at least two preset interactive controls and the translucent layer are displayed after the current user triggers a user identity, the display modes of the selected user identities and the unselected user identities are adjusted, and other user identities can be re-selected while maintaining the display state of the preset interactive panel. The preset interactive control displayed in the preset interactive panel is also updated. After the user selects a preset interactive control, he/she sends a message corresponding to the currently selected preset interactive control to the user corresponding to the currently selected user identity, and plays the animation effect with the moving direction pointing to the user identity. After receiving the message sent by other users by triggering the preset interactive control, he/she can quickly enter the conversation interface and display the related preset interactive control in the conversation interface, so that the message interaction between users is lighter and faster, the interaction efficiency is improved, and the interaction experience is improved.

Fig. 9 is a structural block diagram of an apparatus for interface display provided by an embodiment of the present disclosure. The apparatus can be realized by software and/or hardware, and can be generally integrated in an electronic device, and the interface can be displayed by executing a method for displaying an interface. As shown in Fig. 9, the apparatus includes:
a user identity display module 901, configured to display at least one user identity in a preset user identity set in a first region in a preset interface;
an interactive panel display module 902, configured to display a preset interactive panel in a second region of the preset interface in response to a first trigger operation on a first user identity displayed in the first region, and show at least one preset interactive control in the preset interactive panel, in which the first user identity is included in the at least one user identity, and the preset interactive control is used to be triggered by a current user to send a message to a first user corresponding to the first user identity.

The apparatus for interface display provided by the embodiment of the present disclosure displays at least one user identity in a preset user identity set in a first region of a preset interface, displays a preset interactive panel in a second region of the preset interface in response to a first trigger operation on a first user identity displayed in the first region, and displays at least one preset interactive control in the preset interactive panel, in which the preset interactive control is used to be triggered by a current user to send a message to a first user corresponding to the first user identity. By adopting the technical scheme, the current user can select the interactive object in the preset interface, automatically trigger the display of the preset interactive panel in the preset interface after selection, and display the preset interactive control on the preset interactive panel, so that the current user can conveniently send the corresponding message to the interactive object by triggering the preset interactive control, and the message interaction efficiency can be effectively improved.

Optionally, the apparatus further comprises a user identity display module, configured to keep to display the first user identity in the first region of the preset interface when the preset interactive panel is displayed in the second region of the preset interface.

Optionally, the apparatus further comprises a first adjustment module, configured to adjust a display mode of a region other than the second region and the first user identity in the preset interface in response to the first trigger operation on the first user identity.

Optionally, the apparatus further comprises a control determining module, configured to determine the preset interactive control shown in the preset interactive panel based on preset information.

Optionally, the preset information includes at least one selected from the group consisting of: current application scenario, time information, attribute information of the first user, attribute information of the current user, and association relationship between the current user and the first user.

Optionally, the preset interactive control comprises an emoji control, and the emoji control is used to be triggered by the current user to send a corresponding message to the first user.

Optionally, the preset interactive control includes a message input sub-panel, and the message input sub-panel is used for the current user to be input the message content sent to the first user.

Optionally, the preset interactive control includes a message input trigger region, which is used for the current user to trigger to show the message input sub-panel, and the message input sub-panel is used for the current user to be input the message content sent to the first user.

Optionally, at least two user identities in the preset user identity set are displayed in the first region.

The apparatus further includes a second adjustment module, configured to adjust the display mode of at least one of the first user identity and the second user identity in response to the first trigger operation on the first user identity, so that a current display mode of the first user identity is different from a current display mode of the second user identity, in which the second user identity is included in the at least two user identities.

Optionally, the apparatus further comprises:
a layer display module, configured to display a translucent layer in a third region other than the second region in the preset interface in response to the first trigger operation on the first user identity, in which the third region includes the first region.

Adjusting the display mode of at least one of the first user identity and the second user identity to make the current display mode of the first user identity different from the current display mode of the second user identity includes:
displaying the first user identity on the upper layer of the translucent layer and displaying the second user identity on the lower layer of the translucent layer.

Optionally, adjusting the display mode of at least one of the first user identity and the second user identity to make the current display mode of the first user identity different from the current display mode of the second user identity comprises:
adjusting a display size of at least one of the first user identity and the second user identity to make that the current display size of the first user identity is larger than the current display size of the second user identity; and/or,
adjusting the shape and/or the color of at least one of the first user identity and the second user identity to make that the current shape and/or the current color of the first user identity is different from the current shape and/or the current color of the second user identity.

Optionally, adjusting the display mode of at least one of the first user identity and the second user identity to make the current display mode of the first user identity different from the current display mode of the second user identity includes: when both the first user identity and the second user identity do not show first association information before the first trigger operation, adding and displaying the first association information for the first user identity; and/or when both the first user identity and the second user identity have shown second association information before the first trigger operation, removing the showing of the second association information of the second user identity.

Optionally, the apparatus further comprises:
a second adjustment module, configured to adjust at least one of the following in response to a first trigger operation on a first user identity: the display mode of the first region and the number of the user identity currently displayed in the first region.

Optionally, the apparatus may further comprise:
a holding module, configured to keep a third user identity in a triggerable state after displaying the preset interactive panel in the second region of the preset interface, in which the third user identity includes the user identity in the preset user identifier set except for the first user identify.

Optionally, the apparatus may further comprise:
an update module, configured to update the preset interactive controls displayed in the preset interactive panel based on the third user identify in response to the second trigger operation on the third user identity after the preset interactive panel is displayed in the second region of the preset interface.

Optionally, the apparatus may further comprise:
a message sending module, configured to send a first message to the first user corresponding to the first user identity in response to a third trigger operation on a first preset interactive control in the preset interactive panel after the preset interactive panel is displayed in the preset interface, in which the first message is associated with the graphic and text information of the first preset interactive control.

Optionally, the apparatus may further comprise:
a playing module, configured to respond to the third trigger operation on the first preset interactive control in the preset interactive panel, and play an animation effect with the moving direction pointing to the first user identity in the preset interface, in which the animation effect is associated with the graphic and text information of the first preset interactive control.

Optionally, the apparatus may further comprise:
a message receiving module, configured to receive a second message, in which the second message is sent by a second user based on a second preset interactive control;
a control display module, configured to display the second message and a third preset interactive control in a conversation interface, in which the third preset interactive control is associated with the second preset interactive control, and the conversation members in the conversation interface include the current user and the second user.

Optionally, the user corresponding to the user identity contained in the preset user identity set is currently online.

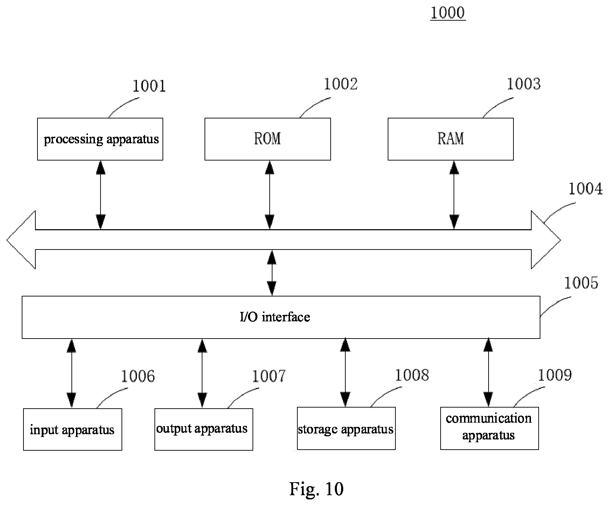

Referring to Fig. 10, Fig. 10 illustrates a schematic structural diagram of an electronic device 1000 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in FIG. 10 is merely an example.

As shown in Fig. 10, the electronic device 1000 may include a processing apparatus 1001 (e.g., a central processing unit, a graphics processing unit, etc.), which can perform various suitable actions and processing according to a program stored in a read-only memory (ROM) 1002 or a program loaded from a storage apparatus 1008 into a random-access memory (RAM) 1003. The RAM 1003 further stores various programs and data required for operations of the electronic device 1000. The processing apparatus 1001, the ROM 1002, and the RAM 1003 are interconnected by means of a bus 1004. An input/output (I/O) interface 1005 is also connected to the bus 1004.

Usually, the following apparatus may be connected to the I/O interface 1005: an input apparatus 1006 including, for example, a touch screen, a touch pad, a keyboard, a mouse, a camera, a microphone, an accelerometer, a gyroscope, or the like; an output apparatus 1007 including, for example, a liquid crystal display (LCD), a loudspeaker, a vibrator, or the like; a storage apparatus 1008 including, for example, a magnetic tape, a hard disk, or the like; and a communication apparatus 1009. The communication apparatus 1009 may allow the electronic device 1000 to be in wireless or wired communication with other devices to exchange data. While Fig. 10 illustrates the electronic device 1000 having various apparatuses, it should be understood that not all of the illustrated apparatuses are necessarily implemented or included. More or fewer apparatuses may be implemented or included alternatively.

In an embodiment, according to the embodiment of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1009 and installed, or may be installed from the storage apparatus 1008, or may be installed from the ROM 1002. When the computer program is executed by the processing apparatus 1001, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, causes the electronic device to display at least one user identity in a preset user identity set in a first region in a preset interface; in response to a first trigger operation on a first user identity displayed in the first region, a preset interactive panel is displayed in a second region of the preset interface, and at least one preset interactive control is displayed in the preset interactive panel, in which the first user identity is included in the at least one user identity, and the preset interactive control is used to be triggered by a current user to send a message to a first user corresponding to the first user identity.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the user identity display module can also be described as "a module that displays at least one user identity in the preset user identity set in the first region of the preset interface".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, a method for displaying an interface is provided, which includes:
displaying at least one user identity in a preset user identity set in a first region of a preset interface;
in response to a first trigger operation on a first user identity displayed in the first region, displaying a preset interactive panel in a second region of the preset interface, and displaying at least one preset interactive control in the preset interactive panel, in which the first user identity is comprised in the at least one user identity, and the preset interactive control is used to be triggered by a current user to send a message to a first user corresponding to the first user identity.

According to one or more embodiments of the present disclosure, when the preset interactive panel is displayed in the second region of the preset interface, the first region in the preset interface is kept to display the first user identity.

According to one or more embodiments of the present disclosure, the method further comprises:
in response to the first trigger operation on the first user identity, adjusting a display mode of a region other than the second region and the first user identity in the preset interface.

According to one or more embodiments of the present disclosure, the method further comprises:
determining the preset interactive control displayed in the preset interactive panel based on preset information.

According to one or more embodiments of the present disclosure, the preset information includes at least one selected from the group consisting of:
current application scenario, time information, attribute information of the first user, attribute information of the current user, and an association relationship between the current user and the first user.

According to one or more embodiments of the present disclosure, the preset interactive control comprises an emoji control, and the emoji control is used to be triggered by the current user to send a corresponding message to the first user.

According to one or more embodiments of the present disclosure, the preset interactive control comprises a message input sub-panel, and the message input sub-panel is used for the current user to be input a message content sent to the first user.

According to one or more embodiments of the present disclosure, the preset interactive control comprises a message input trigger region, and the message input trigger region is used to be triggered by the current user to show a message input sub-panel, and the message input sub-panel is used for the current user to be input a message content sent to the first user.

According to one or more embodiments of the present disclosure, at least two user identities in the preset user identity set are displayed in the first region, and the method further comprises:
in response to the first trigger operation on the first user identity, adjusting a display mode of at least one of the first user identity and the second user identity to make a current display mode of the first user identity different from a current display mode of the second user identity, in which the second user identity is comprised in the at least two user identities.

According to one or more embodiments of the present disclosure, the method further comprises:
in response to the first trigger operation on the first user identity, displaying a translucent layer in a third region other than the second region in the preset interface, in which the third region comprises the first region;
adjusting the display mode of at least one of the first user identity and the second user identity to make the current display mode of the first user identity different from the current display mode of the second user identity comprises:
displaying the first user identity on an upper layer of the translucent layer and displaying the second user identity on a lower layer of the translucent layer.

According to one or more embodiments of the present disclosure, adjusting the display mode of at least one of the first user identity and the second user identity to make the current display mode of the first user identity different from the current display mode of the second user identity comprises at least one of the following:
adjusting a display size of at least one of the first user identity and the second user identity to make that a current display size of the first user identity is larger than a current display size of the second user identity; and/or
adjusting at least one of a shape and/or a color of at least one of the first user identity and the second user identity to make that the at least one of the shape and/or the color of the first user identity is different from the at least one of the shape and/or the color of the second user identity.

According to one or more embodiments of the present disclosure, adjusting the display mode of at least one of the first user identity and the second user identity to make the current display mode of the first user identity different from the current display mode of the second user identity comprises at least one of the following:
when both the first user identity and the second user identity do not display first association information before the first trigger operation, adding and showing the first association information for the first user identity; and/or
when both the first user identity and the second user identity have shown second association information before the first trigger operation, removing the showing of the second association information of the second user identity.

According to one or more embodiments of the present disclosure, the method further comprises:
in response to the first trigger operation on the first user identity, adjusting at least one of the following: a display mode of the first region and a number of the user identity currently displayed in the first region.

According to one or more embodiments of the present disclosure, after the preset interactive panel is displayed in the second region in the preset interface, the method further comprises:
keeping a third user identity in a triggerable state, in which the third user identity comprises the user identity except the first user identity in the preset user identity set.

According to one or more embodiments of the present disclosure, after the preset interactive panel is displayed in the second region in the preset interface, the method further comprises:
in response to a second trigger operation on the third user identity, updating the preset interactive control displayed in the preset interactive panel based on the third user identity.

According to one or more embodiments of the present disclosure, after displaying the preset interactive panel in the preset interface, the method further comprises:
in response to a third trigger operation on a first preset interactive control in the preset interactive panel sending a first message to the first user corresponding to the first user identity, in which the first message is associated with graphic and text information of the first preset interactive control.

According to one or more embodiments of the present disclosure, the method further comprises:
in response to the third trigger operation on the first preset interactive control in the preset interactive panel, playing an animation effect with a moving direction pointing to the first user identity in the preset interface, in which the animation effect is associated with the graphic and text information of the first preset interactive control.

According to one or more embodiments of the present disclosure, the method further comprises:
receiving a second message, in which the second message is sent by a second user based on a second preset interactive control;
displaying the second message and a third preset interactive control in a conversation interface, in which the third preset interactive control is associated with the second preset interactive control, and the conversation members in the conversation interface comprise the current user and the second user.

According to one or more embodiments of the present disclosure, a user corresponding to the user identity contained in the preset user identity set is currently online.

According to one or more embodiments of the present disclosure, an apparatus for interface display is provided, and the apparatus includes:
a user identity display module, configured to display at least one user identity in a preset user identity set in a first region in a preset interface;
an interactive panel display module, configured to display a preset interactive panel in a second region of the preset interface in response to a first trigger operation on a first user identity displayed in the first region, and display at least one preset interactive control in the preset interactive panel, in which the first user identity is comprised in the at least one user identity, and the preset interactive control is used to be triggered by a current user to send a message to a first user corresponding to the first user identity.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

## Claims

1. A method for displaying an interface, comprising:
displaying at least one user identity (203,703) in a preset user identity set in a first region (202, 702) of a preset interface (201, 701);
in response to a first trigger operation on a first user identity (502) displayed in the first region (202, 702), displaying a preset interactive panel (204, 704) in a second region of the preset interface (201, 701), and displaying at least one preset interactive control (205) in the preset interactive panel (204, 704), wherein the first user identity (502) is comprised in the at least one user identity (203,703), and the preset interactive control (205) is used to be triggered by a current user to send a message to a first user corresponding to the first user identity (502),
wherein the first region (202, 702) and the second region are located on the preset interface (201, 701),
wherein when the preset interactive panel (204, 704) is displayed in the second region of the preset interface (201, 701), the first region (202, 702) in the preset interface (201, 701) is kept to display the at least one user identity (203,703).

2. The method according to claim 1,
further comprising: in response to the first trigger operation on the first user identity (502), adjusting a display mode of a region other than the second region and the first user identity (502) in the preset interface (201, 701); or
further comprising: in response to the first trigger operation on the first user identity (502), adjusting at least one selected from the group consisting of: a display mode of the first region (202, 702) and a number of the user identity (203,703) currently displayed in the first region (202, 702).

3. The method according to claim **1,** further comprising:
determining the preset interactive control (205) displayed in the preset interactive panel (204, 704) based on preset information.

4. The method according to claim 1, wherein the preset interactive control (205) comprises an emoji control (302, 705), and the emoji control (302, 705) is used to be triggered by the current user to send a corresponding message to the first user; and/or
the preset interactive control (205) comprises a message input sub-panel (303), and the message input sub-panel (303) is used for the current user to be input a message content sent to the first user; and/or
the preset interactive control (205) comprises a message input trigger region (402, 706), and the message input trigger region (402, 706) is used to be triggered by the current user to show a message input sub-panel (303), and the message input sub-panel (303) is used for the current user to be input a message content sent to the first user.

5. The method according to claim 1, wherein at least two user identities (203,703) in the preset user identity set are displayed in the first region (202, 702), and the method further comprises:
in response to the first trigger operation on the first user identity (502), adjusting a display mode of at least one of the first user identity (502) and the second user identity to make a current display mode of the first user identity (502) different from a current display mode of the second user identity, wherein the second user identity is comprised in the at least two user identities (203,703).

6. The method according to claim 5, further comprising:
in response to the first trigger operation on the first user identity (502), displaying a translucent layer (501, 707) in a third region other than the second region in the preset interface (201, 701), wherein the third region comprises the first region (202, 702);
adjusting the display mode of at least one of the first user identity (502) and the second user identity to make the current display mode of the first user identity (502) different from the current display mode of the second user identity comprises:
displaying the first user identity (502) on an upper layer of the translucent layer (501, 707) and displaying the second user identity on a lower layer of the translucent layer (501, 707).

7. The method according to claim 5, wherein adjusting the display mode of at least one of the first user identity (502) and the second user identity to make the current display mode of the first user identity (502) different from the current display mode of the second user identity comprises at least one of the following:
adjusting a display size of at least one of the first user identity (502) and the second user identity to make that a current display size of the first user identity (502) is larger than a current display size of the second user identity;
adjusting a shape of at least one of the first user identity (502) and the second user identity to make that a current shape of the first user identity (502) is different from a current shape of the second user identity;
adjusting a color of at least one of the first user identity (502) and the second user identity to make that a current color of the first user identity (502) is different from a current color of the second user identity.

8. The method according to claim 5, wherein adjusting the display mode of at least one of the first user identity (502) and the second user identity to make the current display mode of the first user identity (502) different from the current display mode of the second user identity comprises at least one of the following:
when both the first user identity (502) and the second user identity do not show first association information before the first trigger operation, adding and showing the first association information for the first user identity (502);
when both the first user identity (502) and the second user identity have shown second association information before the first trigger operation, removing the showing of the second association information of the second user identity.

9. The method according to claim 1, wherein, after the preset interactive panel (204, 704) is displayed in the second region in the preset interface (201, 701), the method further comprises:
keeping a third user identity in a triggerable state, wherein the third user identity comprises the user identity except the first user identity (502) in the preset user identity set.

10. The method according to claim 9, wherein, after the preset interactive panel (204, 704) is displayed in the second region in the preset interface (201, 701), the method further comprises: in response to a second trigger operation on the third user identity, updating the preset interactive control displayed in the preset interactive panel (204, 704) based on the third user identity.

11. The method according to claim 1, wherein, after displaying the preset interactive panel (204, 704) in the preset interface (201, 701), the method further comprises:
in response to a third trigger operation on a first preset interactive control in the preset interactive panel (204, 704), sending a first message to the first user corresponding to the first user identity (502), wherein the first message is associated with graphic and text information of the first preset interactive control;
in response to the third trigger operation on the first preset interactive control in the preset interactive panel (204, 704), playing an animation effect with a moving direction pointing to the first user identity in the preset interface (201, 701), wherein the animation effect is associated with the graphic and text information of the first preset interactive control.

12. The method according to claim **1,** further comprising:
receiving a second message (803), wherein the second message (803) is sent by a second user based on a second preset interactive control;
displaying the second message (803) and a third preset interactive control in a conversation interface, wherein the third preset interactive control is associated with the second preset interactive control, and conversation members in the conversation interface comprise the current user and the second user.

13. An apparatus for interface display, comprising:
a user identity display module (901), configured to display at least one user identity (203,703) in a preset user identity set in a first region (202, 702) in a preset interface (201, 701);
an interactive panel display module (902), configured to display a preset interactive panel (204, 704) in a second region of the preset interface (201, 701) in response to a first trigger operation on a first user identity (502) displayed in the first region (202, 702), and show at least one preset interactive control (205) in the preset interactive panel (204, 704), wherein the first user identity (502) is comprised in the at least one user identity (203,703), and the preset interactive control (205) is used to be triggered by a current user to send a message to a first user corresponding to the first user identity (502),
wherein,
the first region (202, 702) and the second region are located on the preset interface, and
the user identity display module (901) is configured to keep to display the at least one first user identity (203,703) in the first region (202, 702) of the preset interface (201, 701) when the preset interactive panel (204, 704) is displayed in the second region of the preset interface (201, 701).

14. A computer program comprising processor-executable instructions which, when the program is run by an electronic device (1000), comprising a memory (1002/1003) storing the instructions and a processor (1001) configured to execute the instructions, cause the electronic device to implement the method according to any one of claims 1 to 12.

15. A computer-readable storage medium, wherein a computer program is stored on the computer-readable storage medium, and the method according to any one of claims 1 to 12 is implemented when the computer program is executed by a processor.

## Patentansprüche

1. Verfahren zum Anzeigen einer Schnittstelle, umfassend:
Anzeigen von mindestens einer Benutzeridentität (203,703) aus einer voreingestellten Benutzeridentitätsmenge in einem ersten Bereich (202, 702) einer voreingestellten Schnittstelle (201, 701);
als Reaktion auf einen ersten Auslösevorgang für eine erste Benutzeridentität (502), die in dem ersten Bereich (202, 702) angezeigt wird, Anzeigen eines voreingestelltes interaktives Bedienfelds (204, 704) in einem zweiten Bereich der voreingestellten Schnittstelle (201, 701), und Anzeigen von mindestens einem voreingestellten interaktiven Steuerelement (205) in dem voreingestellten interaktiven Bedienfeld (204, 704), wobei die erste Benutzeridentität (502) in der mindestens einen Benutzeridentität (203, 703) umfasst ist, und das voreingestellte interaktive Steuerelement (205) dazu dient, durch einen aktuellen Benutzer ausgelöst zu werden, um eine Nachricht an einen ersten Benutzer zu senden, der der ersten Benutzeridentität (502) entspricht,
wobei sich der erste Bereich (202, 702) und der zweite Bereich auf der voreingestellten Schnittstelle (201, 701) befinden,
wobei, wenn das voreingestellte interaktive Bedienfeld (204, 704) in dem zweiten Bereich der voreingestellten Schnittstelle (201, 701) angezeigt wird, der erste Bereich (202, 702) in der voreingestellten Schnittstelle (201, 701) beibehalten wird, um die mindestens eine Benutzeridentität (203, 703) anzuzeigen.

2. Verfahren nach Anspruch 1,
ferner umfassend: als Reaktion auf den ersten Auslösevorgang für die erste Benutzeridentität (502), Anpassen eines Anzeigemodus für einen anderen Bereich als den zweiten Bereich und der ersten Benutzeridentität (502) in der voreingestellten Schnittstelle (201, 701); oder
ferner umfassend: als Reaktion auf den ersten Auslösevorgang für die erste Benutzeridentität (502), Anpassen mindestens eines ausgewählten Elements aus der Gruppe bestehend aus: einem Anzeigemodus des ersten Bereichs (202, 702) und einer Nummer der Benutzeridentität (203, 703), die aktuell in dem ersten Bereich (202, 702) angezeigt wird.

3. Verfahren nach Anspruch 1, ferner umfassend:
Bestimmen des voreingestellten interaktiven Steuerelements (205), das in dem voreingestellten interaktiven Bedienfeld (204, 704) angezeigt wird, auf Basis von voreingestellten Informationen.

4. Verfahren nach Anspruch 1, wobei das voreingestellte interaktive Steuerelement (205) ein Emoji-Steuerelement (302, 705) umfasst und das Emoji-Steuerelement (302, 705) dazu dient, durch den aktuellen Benutzer ausgelöst zu werden, um eine entsprechende Nachricht an den ersten Benutzer zu senden; und/oder
das voreingestellte interaktive Steuerelement (205) ein Nachrichteneingabe-Unterfeld (303) umfasst, und das Nachrichteneingabe-Unterfeld (303) dazu dient, dass der aktuelle Benutzer einen an den ersten Benutzer zu sendenden Nachrichteninhalt eingeben kann; und/oder
das voreingestellte interaktive Steuerelement (205) einen Nachrichteneingabe-Auslösebereich (402, 706) umfasst, und der Nachrichteneingabe-Auslösebereich (402, 706) dazu dient, durch den aktuellen Benutzer ausgelöst zu werden, um ein Nachrichteneingabe-Unterfeld (303) anzuzeigen, und das Nachrichteneingabe-Unterfeld (303) dazu dient, dass der aktuelle Benutzer einen an den ersten Benutzer zu sendenden Nachrichteninhalt eingeben kann.

5. Verfahren nach Anspruch 1, wobei mindestens zwei Benutzeridentitäten (203,703) aus der voreingestellten Benutzeridentitätsmenge in dem ersten Bereich (202, 702) angezeigt werden, und das Verfahren ferner umfasst:
als Reaktion auf den ersten Auslösevorgang für die erste Benutzeridentität (502), Anpassen eines Anzeigemodus von mindestens einer von der ersten Benutzeridentität (502) und der zweiten Benutzeridentität, damit sich der aktuelle Anzeigemodus der ersten Benutzeridentität (502) von einem aktuellen Anzeigemodus der zweiten Benutzeridentität unterscheidet, wobei die zweite Benutzeridentität in den mindestens zwei Benutzeridentitäten (203, 703) umfasst ist.

6. Verfahren nach Anspruch 5, ferner umfassend:
als Reaktion auf den ersten Auslösevorgang für die erste Benutzeridentität (502), Anzeigen einer durchscheinenden Ebene (501, 707) in einem dritten Bereich, der nicht der zweite Bereich der voreingestellten Schnittstelle (201, 701) ist, wobei der dritte Bereich den ersten Bereich (202, 702) umfasst;
wobei das Anpassen des Anzeigemodus von mindestens einer von der ersten Benutzeridentität (502) und der zweiten Benutzeridentität, damit sich der aktuelle Anzeigemodus der ersten Benutzeridentität (502) von dem aktuellen Anzeigemodus der zweiten Benutzeridentität unterscheidet, umfasst:
Anzeigen der ersten Benutzeridentität (502) auf einer oberen Ebene der durchscheinenden Ebene (501, 707) und Anzeigen der zweiten Benutzeridentität auf einer unteren Ebene der durchscheinenden Ebene (501, 707).

7. Verfahren nach Anspruch 5, wobei das Anpassen des Anzeigemodus von mindestens einer von der ersten Benutzeridentität (502) und der zweiten Benutzeridentität, damit sich der aktuelle Anzeigemodus der ersten Benutzeridentität (502) von dem aktuellen Anzeigemodus der zweiten Benutzeridentität unterscheidet, mindestens einen der folgenden Schritte umfasst:
Anpassen einer Anzeigegröße von mindestens einer von der ersten Benutzeridentität (502) und der zweiten Benutzeridentität, damit eine aktuelle Anzeigegröße der ersten Benutzeridentität (502) größer ist als eine aktuelle Anzeigegröße der zweiten Benutzeridentität;
Anpassen einer Form von mindestens einer von der ersten Benutzeridentität (502) und der zweiten Benutzeridentität, damit sich eine aktuelle Form der ersten Benutzeridentität (502) von einer aktuellen Form der zweiten Benutzeridentität unterscheidet;
Anpassen einer Farbe von mindestens einer von der ersten Benutzeridentität (502) und der zweiten Benutzeridentität, damit sich eine aktuelle Farbe der ersten Benutzeridentität (502) von einer aktuellen Farbe der zweiten Benutzeridentität unterscheidet.

8. Verfahren nach Anspruch 5, wobei das Anpassen des Anzeigemodus von mindestens einer von der ersten Benutzeridentität (502) und der zweiten Benutzeridentität, damit sich der aktuelle Anzeigemodus der ersten Benutzeridentität (502) von dem aktuellen Anzeigemodus der zweiten Benutzeridentität unterscheidet, mindestens einen der folgenden Schritte umfasst:
wenn weder die erste Benutzeridentität (502) noch die zweite Benutzeridentität vor dem ersten Auslösevorgang erste Zuordnungsinformationen zeigen, Hinzufügen und Zeigen der ersten Zuordnungsinformationen für die erste Benutzeridentität (502);
wenn sowohl die erste Benutzeridentität (502) als auch die zweite Benutzeridentität vor dem ersten Auslösevorgang zweite Zuordnungsinformationen gezeigt haben, Aufheben des Zeigens der zweiten Zuordnungsinformationen der zweiten Benutzeridentität.

9. Verfahren nach Anspruch 1, wobei das Verfahren, nachdem das voreingestellte interaktive Bedienfeld (204, 704) in dem zweiten Bereich der voreingestellten Schnittstelle (201, 701) angezeigt wurde, ferner Folgendes umfasst:
Halten einer dritten Benutzeridentität in einem auslösbaren Zustand, wobei die dritte Benutzeridentität die Benutzeridentität mit Ausnahme der ersten Benutzeridentität (502) in der voreingestellten Benutzeridentitätsmenge umfasst.

10. Verfahren nach Anspruch 9, wobei das Verfahren, nachdem das voreingestellte interaktive Bedienfeld (204, 704) in dem zweiten Bereich der voreingestellten Schnittstelle (201, 701) angezeigt wurde, ferner Folgendes umfasst: als Reaktion auf einen zweiten Auslösevorgang für die dritte Benutzeridentität, Aktualisieren des in dem voreingestellten interaktiven Bedienfeld (204, 704) angezeigten voreingestellten interaktiven Steuerelements basierend auf der dritten Benutzeridentität.

11. Verfahren nach Anspruch 1, wobei das Verfahren, nachdem das voreingestellte interaktive Bedienfeld (204, 704) in der voreingestellten Schnittstelle (201, 701) angezeigt wurde, ferner Folgendes umfasst:
als Reaktion auf einen dritten Auslösevorgang für ein erstes voreingestelltes interaktives Steuerelement in dem voreingestellten interaktiven Bedienfeld (204, 704), Senden einer ersten Nachricht an den ersten Benutzer, der der ersten Benutzeridentität (502) entspricht, wobei die erste Nachricht mit grafischen und textlichen Informationen des ersten voreingestellten interaktiven Steuerelements verknüpft ist;
als Reaktion auf den dritten Auslösevorgang für das erste voreingestellte interaktive Steuerelement in dem voreingestellten interaktiven Bedienfeld (204, 704), Wiedergeben eines Animationseffekts mit einer Bewegungsrichtung, die auf die erste Benutzeridentität in der voreingestellten Schnittstelle (201, 701) zeigt, wobei der Animationseffekt mit den grafischen und textlichen Informationen des ersten voreingestellten interaktiven Steuerelements verknüpft ist.

12. Verfahren nach Anspruch 1, ferner umfassend:
Empfangen einer zweiten Nachricht (803), wobei die zweite Nachricht (803) durch einen zweiten Benutzer basierend auf einem zweiten voreingestellten interaktiven Steuerelement gesendet wird;
Anzeigen der zweiten Nachricht (803) und eines dritten voreingestellten interaktiven Steuerelements in einer Konversationsschnittstelle, wobei das dritte voreingestellte interaktive Steuerelement mit dem zweiten voreingestellten interaktiven Steuerelement verknüpft ist und die Konversationsteilnehmer in der Konversationsschnittstelle den aktuellen Benutzer und den zweiten Benutzer umfassen.

13. Einrichtung zur Anzeige einer Schnittstelle, umfassend:
ein Benutzeridentitätsanzeigemodul (901), das so konfiguriert ist, dass es mindestens eine Benutzeridentität (203,703) aus einer voreingestellten Benutzeridentitätsmenge in einem ersten Bereich (202, 702) in einer voreingestellten Schnittstelle (201, 701) anzeigt;
ein interaktives Bedienfeld-Anzeigemodul (902), das so konfiguriert ist, dass es als Reaktion auf einen ersten Auslösevorgang für eine erste Benutzeridentität (502), die in dem ersten Bereich (202, 702) angezeigt wird, ein voreingestelltes interaktives Bedienfeld (204, 704) in einem zweiten Bereich der voreingestellten Schnittstelle (201, 701) anzeigt, und mindestens ein voreingestelltes interaktives Steuerelement (205) in dem voreingestellten interaktiven Bedienfeld (204, 704) zeigt, wobei die erste Benutzeridentität (502) in der mindestens einen Benutzeridentität (203, 703) umfasst ist und das voreingestellte interaktive Steuerelement (205) dazu dient, durch einen aktuellen Benutzer ausgelöst zu werden, um eine Nachricht an einen ersten Benutzer zu senden, der der ersten Benutzeridentität (502) entspricht,
wobei
sich der erste Bereich (202, 702) und der zweite Bereich auf der voreingestellten Schnittstelle befinden, und
das Benutzeridentitätsanzeigemodul (901) so konfiguriert ist, dass es die mindestens eine erste Benutzeridentität (203,703) in dem ersten Bereich (202, 702) der voreingestellten Schnittstelle (201, 701) weiterhin anzeigt, wenn das voreingestellte interaktive Bedienfeld (204, 704) in dem zweiten Bereich der voreingestellten Schnittstelle (201, 701) angezeigt wird.

14. Computerprogramm, umfassend prozessor-ausführbare Anweisungen, die, wenn das Programm durch eine elektronische Vorrichtung (1000) ausgeführt wird, einen Speicher (1002/1003) zum Speichern der Anweisungen und einen Prozessor (1001) umfasst, der zur Ausführung der Anweisungen konfiguriert ist, bewirken, dass die elektronische Vorrichtung das Verfahren nach einem der Ansprüche 1 bis 12 implementiert.

15. Computerlesbares Speicherungsmedium, wobei auf dem computerlesbaren Speicherungsmedium ein Computerprogramm gespeichert ist, und das Verfahren nach einem der Ansprüche 1 bis 12 implementiert wird, wenn das Computerprogramm durch einen Prozessor ausgeführt wird.

## Revendications

1. Procédé d'affichage d'une interface, comprenant :
l'affichage d'au moins une identité d'utilisateur (203, 703) dans un ensemble d'identités d'utilisateur prédéfini dans une première région (202, 702) d'une interface prédéfinie (201, 701) ;
en réponse à une première opération de déclenchement sur une première identité d'utilisateur (502) affichée dans la première région (202, 702), l'affichage d'un panneau interactif prédéfini (204, 704) dans une deuxième région de l'interface prédéfinie (201, 701), et l'affichage d'au moins une commande interactive prédéfinie (205) dans le panneau interactif prédéfini (204, 704), dans lequel la première identité d'utilisateur (502) est comprise dans la au moins une identité d'utilisateur (203, 703), et la commande interactive prédéfinie (205) est utilisée pour être déclenchée par un utilisateur actuel afin d'envoyer un message à un premier utilisateur correspondant à la première identité d'utilisateur (502),
dans lequel la première région (202, 702) et la deuxième région sont situées sur l'interface prédéfinie (201, 701),
dans lequel, lorsque le panneau interactif prédéfini (204, 704) est affiché dans la deuxième région de l'interface prédéfinie (201, 701), la première région (202, 702) de l'interface prédéfinie (201, 701) est conservée pour afficher la au moins une identité d'utilisateur (203, 703).

2. Procédé selon la revendication 1,
comprenant en outre : en réponse à la première opération de déclenchement sur la première identité d'utilisateur (502), l'ajustement d'un mode d'affichage d'une région autre que la deuxième région et la première identité d'utilisateur (502) dans l'interface prédéfinie (201, 701) ; ou
comprenant en outre : en réponse à la première opération de déclenchement sur la première identité d'utilisateur (502), l'ajustement d'au moins un élément sélectionné dans le groupe consistant en : un mode d'affichage de la première région (202, 702) et un numéro de l'identité d'utilisateur (203, 703) actuellement affichée dans la première région (202, 702).

3. Procédé selon la revendication 1, comprenant en outre :
la détermination de la commande interactive prédéfinie (205) affichée dans le panneau interactif prédéfini (204, 704) sur la base d'informations prédéfinies.

4. Procédé selon la revendication 1, dans lequel la commande interactive prédéfinie (205) comprend une commande emoji (302, 705), et la commande emoji (302, 705) est utilisée pour être déclenchée par l'utilisateur actuel afin d'envoyer un message correspondant au premier utilisateur ; et/ou
la commande interactive prédéfinie (205) comprend un sous-panneau de saisie de message (303), et le sous-panneau de saisie de message (303) est utilisé pour que l'utilisateur actuel puisse saisir un contenu de message envoyé au premier utilisateur ; et/ou
la commande interactive prédéfinie (205) comprend une région de déclenchement de saisie de message (402, 706), et la région de déclenchement de saisie de message (402, 706) est utilisée pour être déclenchée par l'utilisateur actuel afin d'afficher un sous-panneau de saisie de message (303), et le sous-panneau de saisie de message (303) est utilisé pour que l'utilisateur actuel puisse saisir un contenu de message envoyé au premier utilisateur.

5. Procédé selon la revendication 1, dans lequel au moins deux identités d'utilisateur (203, 703) de l'ensemble d'identités d'utilisateur prédéfini sont affichées dans la première région (202, 702), et le procédé comprend en outre :
en réponse à la première opération de déclenchement sur la première identité d'utilisateur (502), l'ajustement d'un mode d'affichage d'au moins l'une de la première identité d'utilisateur (502) et de la deuxième identité d'utilisateur pour que le mode d'affichage actuel de la première identité d'utilisateur (502) soit différent du mode d'affichage actuel de la deuxième identité d'utilisateur, dans lequel la deuxième identité d'utilisateur est comprise dans les au moins deux identités d'utilisateur (203, 703).

6. Procédé selon la revendication 5, comprenant en outre :
en réponse à la première opération de déclenchement sur la première identité d'utilisateur (502), l'affichage d'une couche translucide (501, 707) dans une troisième région autre que la deuxième région dans l'interface prédéfinie (201, 701), dans lequel la troisième région comprend la première région (202, 702) ;
l'ajustement du mode d'affichage d'au moins l'une de la première identité d'utilisateur (502) et de la deuxième identité d'utilisateur pour que le mode d'affichage actuel de la première identité d'utilisateur (502) soit différent du mode d'affichage actuel de la deuxième identité d'utilisateur comprend :
l'affichage de la première identité d'utilisateur (502) sur une couche supérieure de la couche translucide (501, 707) et l'affichage de la deuxième identité d'utilisateur sur une couche inférieure de la couche translucide (501, 707).

7. Procédé selon la revendication 5, dans lequel l'ajustement du mode d'affichage d'au moins l'une de la première identité d'utilisateur (502) et de la deuxième identité d'utilisateur pour que le mode d'affichage actuel de la première identité d'utilisateur (502) soit différent du mode d'affichage actuel de la seconde identité d'utilisateur comprend au moins l'une des opérations suivantes :
l'ajustement de la taille d'affichage d'au moins l'une de la première identité d'utilisateur (502) et de la deuxième identité d'utilisateur pour que la taille d'affichage actuelle de la première identité d'utilisateur (502) soit supérieure à la taille d'affichage actuelle de la deuxième identité d'utilisateur ;
l'ajustement de la forme d'au moins l'une de la première identité d'utilisateur (502) et de la deuxième identité d'utilisateur pour que la forme actuelle de la première identité d'utilisateur (502) soit différente de la forme actuelle de la deuxième identité d'utilisateur ;
l'ajustement de la couleur d'au moins l'une de la première identité d'utilisateur (502) et de la deuxième identité d'utilisateur pour que la couleur actuelle de la première identité d'utilisateur (502) soit différente de la couleur actuelle de la deuxième identité d'utilisateur.

8. Procédé selon la revendication 5, dans lequel l'ajustement du mode d'affichage d'au moins l'une de la première identité d'utilisateur (502) et de la deuxième identité d'utilisateur pour que le mode d'affichage actuel de la première identité d'utilisateur (502) soit différent du mode d'affichage actuel de la seconde identité d'utilisateur comprend au moins l'une des opérations suivantes :
lorsque ni la première identité d'utilisateur (502) ni la deuxième identité d'utilisateur n'affichent des premières informations d'association avant la première opération de déclenchement, l'ajout et l'affichage des premières informations d'association pour la première identité d'utilisateur (502) ;
lorsque la première identité d'utilisateur (502) et la deuxième identité d'utilisateur ont toutes deux affiché des secondes informations d'association avant la première opération de déclenchement, la suppression de l'affichage des secondes informations d'association de la deuxième identité d'utilisateur.

9. Procédé selon la revendication 1, dans lequel, après l'affichage du panneau interactif prédéfini (204, 704) dans la deuxième région de l'interface prédéfinie (201, 701), le procédé comprend en outre :
la conservation d'une troisième identité d'utilisateur dans un état déclenchable, dans lequel la troisième identité d'utilisateur comprend l'identité d'utilisateur à l'exception de la première identité d'utilisateur (502) dans l'ensemble d'identités d'utilisateur prédéfini.

10. Procédé selon la revendication 9, dans lequel, après l'affichage du panneau interactif prédéfini (204, 704) dans la deuxième région de l'interface prédéfinie (201, 701), le procédé comprend en outre : en réponse à une deuxième opération de déclenchement sur la troisième identité d'utilisateur, la mise à jour de la commande interactive prédéfinie affichée dans le panneau interactif prédéfini (204, 704) sur la base de la troisième identité d'utilisateur.

11. Procédé selon la revendication 1, dans lequel, après l'affichage du panneau interactif prédéfini (204, 704) dans l'interface prédéfinie (201, 701), le procédé comprend en outre :
en réponse à une troisième opération de déclenchement sur une première commande interactive prédéfinie dans le panneau interactif prédéfini (204, 704), l'envoi d'un premier message au premier utilisateur correspondant à la première identité d'utilisateur (502), dans lequel le premier message est associé à des informations graphiques et textuelles de la première commande interactive prédéfinie ;
en réponse à la troisième opération de déclenchement sur la première commande interactive prédéfinie dans le panneau interactif prédéfini (204, 704), la lecture d'un effet d'animation avec une direction de déplacement pointant vers la première identité d'utilisateur dans l'interface prédéfinie (201, 701), dans lequel l'effet d'animation est associé aux informations graphiques et textuelles de la première commande interactive prédéfinie.

12. Procédé selon la revendication 1, comprenant en outre :
la réception d'un second message (803), dans lequel le second message (803) est envoyé par un second utilisateur sur la base d'une deuxième commande interactive prédéfinie ;
l'affichage du second message (803) et d'une troisième commande interactive prédéfinie dans une interface de conversation, dans lequel la troisième commande interactive prédéfinie est associée à la deuxième commande interactive prédéfinie, et les membres de la conversation dans l'interface de conversation comprennent l'utilisateur actuel et le second utilisateur.

13. Appareil d'affichage d'interface, comprenant :
un module d'affichage d'identité d'utilisateur (901), configuré pour afficher au moins une identité d'utilisateur (203, 703) dans un ensemble d'identités d'utilisateur prédéfini dans une première région (202, 702) d'une interface prédéfinie (201, 701) ;
un module d'affichage de panneau interactif (902), configuré pour afficher un panneau interactif prédéfini (204, 704) dans une deuxième région de l'interface prédéfinie (201, 701) en réponse à une première opération de déclenchement sur une première identité d'utilisateur (502) affichée dans la première région (202, 702), et afficher au moins une commande interactive prédéfinie (205) dans le panneau interactif prédéfini (204, 704), dans lequel la première identité d'utilisateur (502) est comprise dans la au moins une identité d'utilisateur (203, 703), et la commande interactive prédéfinie (205) est utilisée pour être déclenchée par un utilisateur actuel afin d'envoyer un message à un premier utilisateur correspondant à la première identité d'utilisateur (502),
dans lequel,
la première région (202, 702) et la deuxième région sont situées sur l'interface prédéfinie, et
le module d'affichage d'identité d'utilisateur (901) est configuré pour continuer d'afficher la au moins une première identité d'utilisateur (203, 703) dans la première région (202, 702) de l'interface prédéfinie (201, 701) lorsque le panneau interactif prédéfini (204, 704) est affiché dans la deuxième région de l'interface prédéfinie (201, 701).

14. Programme informatique comprenant des instructions exécutables par processeur qui, lorsque le programme est exécuté par un dispositif électronique (1000), comprenant une mémoire (1002/1003) stockant les instructions et un processeur (1001) configuré pour exécuter les instructions, amènent le dispositif électronique à mettre en œuvre le procédé selon l'une quelconque des revendications 1 à 12.

15. Support de stockage lisible par ordinateur, dans lequel un programme informatique est stocké sur le support de stockage lisible par ordinateur, et le procédé selon l'une quelconque des revendications 1 à 12 est mis en œuvre lorsque le programme informatique est exécuté par un processeur.
